# EUROPÄISCHE PATENTSCHRIFT

(11) **EP 3 049 287 B1**
(45) Veröffentlichungstag und Bekanntmachung des Hinweises auf die Patenterteilung: **27.12.2017**
(21) Anmeldenummer: 14783767.8
(22) Anmeldetag: 26.09.2014
(51) Int. Cl.: B60R 11/02

(54) **HALTEVORRICHTUNG FÜR EIN TRAGBARES ELEKTRONISCHES GERÄT IN EINEM KRAFTFAHRZEUG**
HOLDING DEVICE FOR A PORTABLE ELECTRONIC DEVICE IN A VEHICLE
DISPOSITIF DE RETENUE POUR APPAREIL ÉLECTRONIQUE PORTATIF DANS UN VÉHICULE

(30) Priorität: 28.09.2013 DE 102013016214
(43) Veröffentlichungstag der Anmeldung: 03.08.2016
(73) Patentinhaber: Daimler AG, 70327 Stuttgart (DE)
(72) Erfinder: LIPPOLD-FRITZ, Oliver, 73760 Ostfildern (DE); KÜHNAPFEL, Ulf, 70193 Stuttgart (DE); RIVINIUS, Adrian, 70182 Stuttgart (DE); KERNER, Markus, 68753 Waghäusel (DE)
(74) Vertreter: JENSEN & SON
(86) Internationale Anmeldenummer: PCT/EP2014/002614
(87) Internationale Veröffentlichungsnummer: WO 2015/043753

(56) Entgegenhaltungen:
- DE-A1-102005 033 479
- DE-U1-202007 015 959
- FR-A1- 2 964 070
- US-A1- 2012 206 875

## Beschreibung

Die Erfindung betrifft eine Haltevorrichtung für ein tragbares elektronisches Gerät in einem Kraftfahrzeug gemäß dem Oberbegriff von Patentanspruch 1.

Eine derartige Haltevorrichtung ist beispielsweise bereits aus der DE 10 2012 009 658 A1 als bekannt zu entnehmen und dient zur Aufnahme eines tragbaren elektronischen Geräts in Form eines so genannten Smartphones bzw. eines so genannten Tablet-Computers. Die Haltevorrichtung umfasst dabei ein Basisteil mit einer zumindest im Wesentlichen im Querschnitt L-förmigen Aufnahmeschiene, auf welcher das elektronische Gerät mit einer unteren Stirnseite aufgestellt ist. Auf der der unteren Stirnseite gegenüberliegenden oberen Stirnseite wird das elektronische Gerät mittels eines bügelförmigen Sicherungselements gesichert, welches relativ zum Basisteil in Hochrichtung des elektronischen Geräts verstellbar ist.

Eine weitere derartige Haltevorrichtung ist auch aus der DE 20 2011 106 185 U1 als bekannt zu entnehmen, bei welcher ebenfalls ein Basisteil vorgesehen ist, welches an seinem unteren Ende eine kastenartige Aufnahme zur losen Halterung des elektronischen Geräts aufweist. An ihrer der kastenartigen Aufnahme des Basisteils abgewandten Oberseite der Haltevorrichtung ist außerdem ein bügelartiges Sicherungselement vorgesehen, welches zwischen einer Freigabestellung und einer Sicherungsstellung verstellbar ist, in welcher das elektronische Gerät an dem Basisteil gehalten ist.

Beiden Haltevorrichtungen ist es gemeinsam, dass diese nur eine bedingte Halterung bzw. Festlegung des jeweiligen elektronischen Geräts ermöglichen. Insbesondere ist bei beiden Haltevorrichtungen keine zuverlässige seitliche Halterung des jeweiligen elektronischen Geräts gegeben.

Weiterhin zeigt die DE 10 2005 033479 A1 eine Haltevorrichtung, bei der seitliche Führungselemente vorgesehen sind, mittels welchen das elektronische Gerät in die untere Hälfte einer Haltevorrichtung einschiebbar ist. Dies ist dann durch eine Schwenkbewegung in einer oberen Gehäusehälfte fixierbar.

Eine Haltevorrichtung mit einer Befestigungsanordnung zum Fixieren des elektronischen Geräts, welche in Form eines Clips ausgebildet ist, zeigt die DE 20 2007 015 959 U1.

Ferner zeigt die FR 2 964 070 A1 eine Haltevorrichtung, bei der wiederum seitliche Führungselemente für eine Führung des elektronischen Geräts vorgesehen sind, während aus der US 2012/206875 A1 eine Vorrichtung bekannt ist, welche ein Sicherungselement zum Sichern des elektronischen Geräts in Form einer Kippvorrichtung zeigt.

Es ist jedoch mit diesen bekannten Haltevorrichtungen immer relativ aufwändig, das Gerät aus der Vorrichtung zu entfernen.

Aufgabe der vorliegenden Erfindung ist es daher, eine Haltevorrichtung der eingangs genannten Art zu schaffen, welche eine zuverlässigere Halterung des jeweiligen elektronischen Geräts in Kombination mit einer einfachen Entnehmbarkeit, vorzugweise mit einer Hand, gewährleistet.

Diese Aufgabe wird erfindungsgemäß durch eine Haltevorrichtung mit den Merkmalen des Patentanspruchs 1 gelöst. Vorteilhafte Ausgestaltungen mit zweckmäßigen Weiterbildungen der Erfindung sind in den übrigen Patentansprüchen angegeben.

Um eine Haltevorrichtung zu schaffen, mittels welcher eine verbesserte Halterung des elektronischen Geräts zu bewerkstelligen ist, ist es erfindungsgemäß vorgesehen, dass das Basisteil eine Führungseinrichtung mit jeweiligen seitlichen Führungselementen aufweist, mittels welchen das elektronische Gerät in die Haltevorrichtung einschiebbar ist. Weiterhin ist das Sicherungselement als Wippe mit einer auf der einen Seite einer Lagerachse angeordneten Handhabe und mit wenigstens einem auf der anderen Seite der Lagerachse angeordneten Fixierelement ausgebildet. Eine derartige Wippe ist durch eine Bedienperson äußerst einfach und intuitiv handhabbar und ermöglicht darüber hinaus eine besonders günstige Sicherung des elektronischen Geräts innerhalb des Basisteils. Darüber hinaus weist das Sicherungselement wenigstens eine Einschubrampe auf, mittels welcher das Sicherungselement beim Einschieben des elektronischen Geräts in die Haltevorrichtung in die Freigabestellung verlagerbar ist. Mit anderen Worten wird durch die wenigstens eine Einschubrampe ermöglicht, dass sich das Sicherungselement selbsttätig in die Freigabestellung bewegt, ohne dass das Sicherungselement mittels der Handhabe separat betätigt werden muss. Hierdurch ergibt sich eine besonders einfache Fixierung bzw. Einschiebebewegung des elektronischen Geräts in die Haltevorrichtung.

Im Unterschied zum bisherigen Stand der Technik ist demzufolge erfindungsgemäß ein Basisteil vorgesehen, welches mittels der jeweiligen seitlichen Führungselemente eine exakte Einschiebbarkeit des jeweiligen elektronischen Geräts in das Basisteil ermöglicht und andererseits - mittels der jeweiligen Führungselemente - eine zuverlässige Halterung in seiner eingeschobenen Position bzw. im eingeschobenen Zustand gewährleistet. Durch die seitlichen Führungselemente wird somit nicht nur ein in seiner Bedienung einfacherer Befestigungsvorgang an dem Basisteil selbst erreicht, sondern darüber hinaus nach dem Einschieben eine weitaus günstigere Festlegung des elektronischen Geräts an dem Basisteil ermöglicht.

Demgegenüber zeigt insbesondere der Stand der Technik gemäß
DE 20 2011 106 185 U1 zwar bereits eine kastenförmige Aufnahme am unteren Ende des Basisteils, welche jedoch keinerlei seitliche Führung des jeweiligen elektronischen Geräts ermöglicht und insbesondere auch senkrecht zur jeweiligen Bedienfläche des jeweiligen elektronischen Geräts keine hinreichende Sicherung am Basisteil gewährleistet.

Insgesamt ist somit erkennbar, dass durch die vorliegende Erfindung auf einfache Weise manuell ein entsprechendes elektronisches Gerät eingesetzt und fixiert werden kann. Insbesondere bei fahrendem Kraftfahrzeug wird dabei auf äußerst zuverlässige Weise sichergestellt, dass sich das elektronische Gerät nicht relativ zur Haltevorrichtung bewegen kann.

In weiterer Ausgestaltung der Erfindung ist es vorgesehen, dass das elektronische Gerät mittels der jeweiligen seitlichen Führungselemente in der eingeschobenen Position fixiert ist. Mit anderen Worten sollen somit die seitlichen Führungselemente nicht nur einen reproduzierbaren und einfachen Befestigungsvorgang des elektronischen Geräts an der Haltevorrichtung ermöglichen, sondern darüber hinaus auch eine zuverlässige Fixierung in der eingeschobenen Position.

Weiterhin vorteilhaft ist es, dass das Sicherungselement zwischen einer Freigabestellung und einer Sicherungsstellung verlagerbar ist, in welcher das Sicherungselement durch seine selbsthemmende Lagerung das elektronische Gerät fixiert. Demzufolge ist erfindungsgemäß das Sicherungselement so ausgestaltet, dass es in der Sicherungsstellung das elektronische Gerät in einer fixierten Position sichert, ohne dass hierbei ein Federelement oder dergleichen eine entsprechende Federkraft aufbringen muss, welche der Ausschiebebewegung des elektronischen Geräts aus den Führungselementen heraus entgegen wirkt.

In vorteilhafter Ausgestaltung der Erfindung ist der Führungseinrichtung eine Federabstützung zugeordnet, gegen deren Federkraft das elektronische Gerät in die Haltevorrichtung einschiebbar ist bzw. mittels deren Federkraft das elektronische Gerät nach Entsichern des Sicherungselements aus der Haltevorrichtung ausschiebbar bzw. auswerfbar ist. Hierdurch ergibt sich insbesondere durch das Auswerfen des elektronischen Geräts eine besonders leichte Entnahme des elektronischen Geräts aus dem Basisteil.

Eine weitere vorteilhafte Ausführungsform sieht vor, dass das Sicherungselement als zumindest im Wesentlichen U-förmiger Bügel ausgebildet ist, welcher eine Öffnung in einer Rückwand des Basisteils umgibt. Somit ergibt sich insgesamt eine Anordnung, bei welcher der U-förmige Bügel auf einfache Weise mittels einer Hand betätigt und gleichzeitig das elektronische Gerät entnommen werden kann.

In diesem Zusammenhang hat es sich schließlich als vorteilhaft gezeigt, wenn das Basisteil auf seiner der Rückwand mit dem Sicherungselement abgewandten Vorderseite einen umlaufenden Rahmen mit einem Rahmenelement aufweist, welches die Öffnung in der Rückwand des Basisteils überbrückt. Im eingeschobenen Zustand des elektronischen Geräts ergibt sich durch dieses zusätzliche Rahmenelement, welches sich an der Oberseite des elektronischen Geräts befindet, eine besonders günstige Handhabung.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

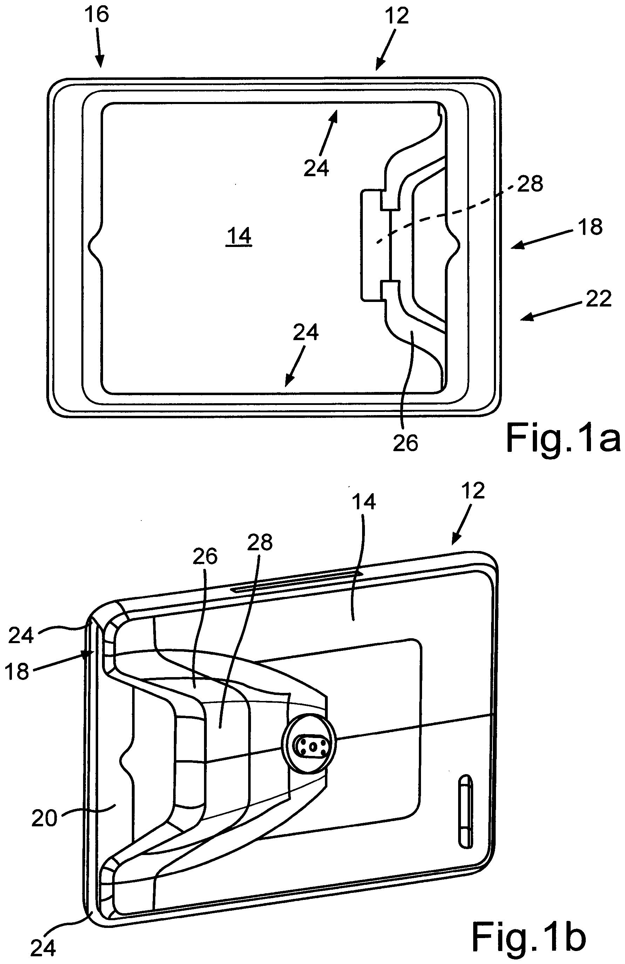

- Fig. 1a, 1b: eine Vorderansicht bzw. eine perspektivische Rückansicht auf eine Haltevorrichtung für ein tragbares elektronisches Gerät in Form eines Tablet-Computers, mit einem Basisteil zur Aufnahme des elektronischen Geräts und mit einem bügelförmigen Sicherungselement, mittels welchem das elektronische Gerät in der Aufnahme sicherbar ist, wobei das Basisteil eine Führungseinrichtung mit jeweiligen seitlichen Führungselementen aufweist, mittels welchen das elektronische Gerät in die Haltevorrichtung einschiebbar ist;

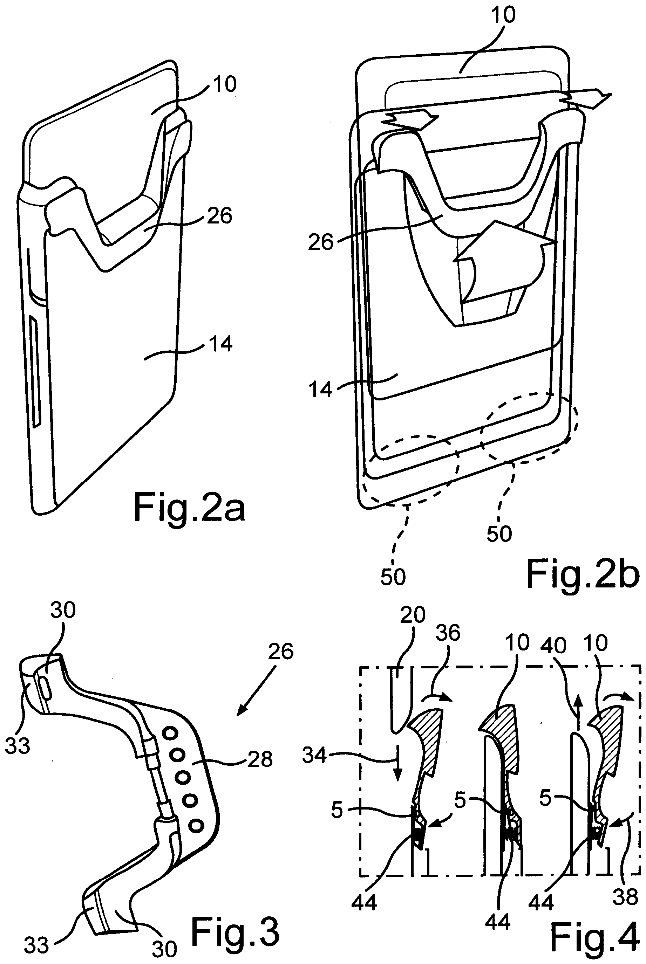

- Fig. 2a, 2b: eine Perspektivansicht von schräg oben und eine weitere Perspektivansicht von schräg hinten auf die Haltevorrichtung gemäß den Fig. 1 a und 1b, wobei in das Basisteil jeweils ein entsprechender Tablet-Computer eingeschoben und in der eingeschobenen Position mittels des Sicherungselements gesichert ist;
- Fig. 3: eine Perspektivansicht auf das separat dargestellte Sicherungselement;
- Fig. 4: eine Abfolge von drei Funktionsdarstellungen des Sicherungselements in jeweiliger Schnittansicht durch die Haltevorrichtung, wobei insbesondere erkennbar ist, in welcher Weise das Sicherungselement beim Einschieben bzw. beim Ausschieben des elektronischen Geräts zwischen einer Freigabestellung und einer Sicherungsstellung verlagerbar ist;

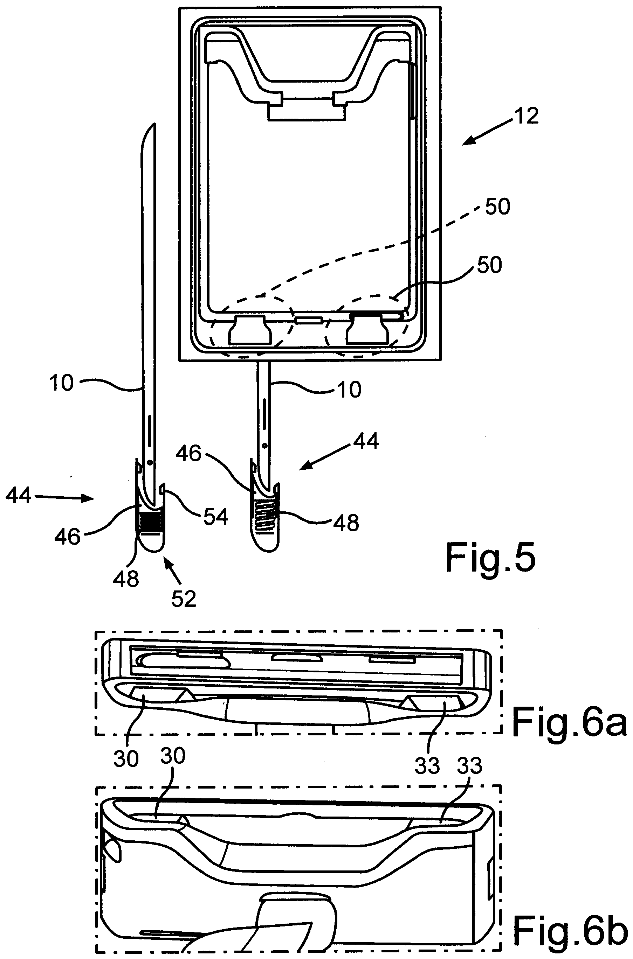

- Fig. 5: eine Draufsicht sowie zwei Schnittansichten auf das Basisteil der Haltevorrichtung, deren Führungseinrichtung eine Federabstützung aufweist, gegen deren Federkraft das elektronische Gerät in die Haltevorrichtung einschiebbar ist bzw. mittels deren Federkraft das elektronische Gerät nach Entsichern des Sicherungselements aus der Haltevorrichtung ausschiebbar ist; und in den
- Fig. 6a, 6b: eine perspektivische Draufsicht bzw. eine Perspektivansicht von schräg oben auf die Haltevorrichtung gemäß den Fig. 1a bis 5 im Bereich des Sicherungselements.

In den Fig. 1 a und 1b ist jeweils in einer Draufsicht bzw. perspektivischen Rückansicht eine Haltevorrichtung für ein tragbares elektronisches Gerät 10, welches im Weiteren in den Fig. 2a und 2b erkennbar ist, dargestellt. Bei dem elektronischen Gerät 10 handelt es sich vorliegend um einen so genannten Tablet-Computer. Gleichfalls wäre es jedoch auch denkbar, die Haltevorrichtung für ein Mobiltelefon oder ein anderes elektronisches Gerät vorzusehen. Die Haltevorrichtung ist vorliegend in einem Innenraum eines Kraftwagens, insbesondere für jeweilige Sitzplätze einer Fondsitzanlage, angeordnet. Die Haltevorrichtung kann dabei rückwärtig eines jeweiligen Vordersitzes oder an einem anderen Verkleidungsteil angeordnet sein.

Wie insbesondere aus den Fig. 1 a und 1b erkennbar ist, umfasst die Haltevorrichtung zunächst ein Basisteil 12, welches eine Rückwand 14 und einen diese umgebenden Rahmen 16 umfasst.

Wie nun in Zusammenschau mit den Fig. 2a und 2b in einer jeweiligen Perspektivansicht erkennbar ist, ist in das Basisteil 12 das elektronische Gerät 10 einschiebbar. Hierzu weist das Basisteil 12 eine Einführungsöffnung 18 auf, welche einerseits durch die Rückwand 14 und andererseits durch ein Rahmenelement 20 des Rahmens 16 begrenzt ist.

Um nun ein besonders günstiges Einschieben bzw. Einführen und Fixieren des elektronischen Geräts 10 innerhalb des Basisteils 12 zu ermöglichen, umfasst dieses eine Führungseinrichtung 22 mit jeweiligen seitlichen Führungselementen 24, welche sich entlang der Längsseiten des Basisteils 12 über die zumindest annähernd gesamte Länge erstrecken. Der Abstand und die jeweilige Kontur der Führungselemente 24 ist dabei auf die Form des elektronischen Geräts 10 abgestimmt, sodass dieses vorzugsweise mit leichtem Spiel, aber dennoch gut geführt in die kassettenartige Aufnahme, welche durch die Führungselemente 24 gebildet ist, eingeschoben werden kann. Die seitlichen Führungselemente 24 umgreifen dabei das elektronische Gerät 10, so dass sich ein Formschluss ergibt, welcher das elektronische Gerät 10 sowohl in Querrichtung als auch in senkrechter Richtung dazu fixiert. Auf der dem elektronischen Gerät 10 zugewandten Seite bzw. an den entsprechenden Flächen kann dabei sowohl die Rückwand 14 als auch die jeweiligen Führungselemente 24 mit einer entsprechenden Beschichtung, einem Bezug oder dergleichen versehen sein.

Fig. 3 zeigt in einer einzelnen Perspektivansicht ein Sicherungselement 26, mittels welchem das gemäß den Fig. 2a und 2b vollständig eingeschobene elektronische Gerät 10 in der eingeschobenen Position bzw. Stellung an dem Basisteil 12 sicherbar ist und demzufolge nicht mehr - ohne Betätigung des Sicherungselements 26 - aus der schachtartigen Führungseinrichtung 22 herausbewegt werden kann. Die Anordnung des Sicherungselements 26 an dem Basisteil 12 ist dabei aus den Fig. 1b, 2a und 2b erkennbar. Die konkrete Funktionsweise des Sicherungselements 22 ist insbesondere aus Fig. 4 erkennbar. Fig. 4 zeigt hierbei in drei jeweiligen Schnittansichten durch die Haltevorrichtung die Anordnung und Funktionsweise des Sicherungselements 26 an dem Basisteil 12.

Zunächst ist dabei aus Fig. 4 erkennbar, dass das Sicherungselement als Wippe mit einer auf der einen Seite einer Lagerachse L angeordneten Handhabe 28 und mit zwei auf der anderen Seite der Lagerachse L angeordneten Fixierelementen 30, welche in Fig. 4 jeweils in Schnittansicht dargestellt sind, ausgebildet ist. Die Fixierelemente 30 sind dabei an jedem der beiden Enden des insgesamt U-förmigen Sicherungselements 26 vorgesehen, wie dies aus Fig. 3 erkennbar ist. Die Lagerachse L verläuft dabei, wie insbesondere in der Zusammenschau mit den Fig. 1a bis 2b erkennbar ist, in Querrichtung des Basisteils 12.

Außerdem ist aus den Fig. 3 und 4 erkennbar, dass unterseitig der Handhabe 28 wenigstens ein Federelement 32 vorgesehen ist, gegen dessen Federkraft das Sicherungselement 26 aus einer in der mittleren Darstellung von Fig. 4 gezeigten Sicherungsstellung in eine links und rechts in Fig. 4 dargestellte Freigabestellung bewegbar ist.

Das Sicherungselement 26 kann dabei einerseits in die Freigabestellung - wie in der linken Darstellung von Fig. 4 erkennbar ist - bewegt werden, wenn das elektronische Gerät 10 gemäß dem Pfeil 34 in die Führungseinrichtung 22 des Basisteils 12 eingeschoben wird. Hierbei weist das jeweilige Fixierelement 30 des Sicherungselements 26 jeweils eine Einschubrampe 33 auf, mittels welcher das Sicherungselement 26 beim Einschieben des elektronischen Geräts 10 in die Haltevorrichtung in die Freigabestellung gemäß dem Pfeil 36 verlagerbar ist. Andererseits kann das Sicherungselement 26 durch Betätigen bzw. Drücken der Handhabe 28 gemäß dem Pfeil 38 in die Freigabestellung bewegt werden, sodass - unter dem jeweiligen Fixierelement 30 hinweg - das elektronische Gerät gemäß dem Pfeil 40 entnommen werden kann.

Insbesondere aus Fig. 4 ist des Weiteren erkennbar, dass das Sicherungselement 22 eine selbsthemmende Ausgestaltung bzw. Lagerung um die Lagerachse L aufweist. Dies bedeutet, dass in der Sicherungsstellung eine Kraft auf das elektronische Gerät 10 in Ausschieberichtung keine Bewegung des Sicherungselements 26 bewirkt. Vielmehr ist hierzu zunächst eine Betätigung der Handhabe 28 erforderlich, bevor das elektronische Gerät 10 entnommen werden kann.

Insbesondere aus den Fig. 1a bis 2b ist des Weiteren erkennbar, dass in der Rückwand 14 eine Öffnung 42 vorgesehen ist, welche im Wesentlichen trapezförmig gestaltet ist. Diese Öffnung 42 wird durch das U-förmige Sicherungselement 26 mit einem Abstand umgeben. Die Kombination von Öffnung 42 und Sicherungselement 26 hat den Vorteil, dass die Handhabe 28 betätigt und mit derselben Hand das elektronische Gerät 10 auf einfache Weise aus der Führungseinrichtung 22 bzw. Aufnahme des Basisteils 12 entnommen werden kann.

Fig. 5 zeigt in einer Vorderansicht bzw. in zwei Schnittansichten die Haltevorrichtung, wobei insbesondere in den beiden Schnittansichten das Basisteil 12 lediglich in einem unteren, dem Sicherungselement 26 abgewandten Bereich erkennbar ist. An dieser unteren Schmalseite ist im Bereich des Rahmens 16 eine Federabstützung 44 vorgesehen, welche vorliegend zwei Sockelteile 46 umfasst, welche über ein jeweiliges Federelement 48 gegen eine äußere Stirnseite des Rahmens 16 abgestützt sind. Jedes der beiden Sockelteile 46 ist dabei an einer Stelle 50 des Rahmens 16 angeordnet, welche in Fig. 2b durch jeweilige strichlinierte Ellipsen angedeutet sind. Natürlich wäre hierbei auch ein einstückiges Sockelteil 46 denkbar. Die Federeinrichtung 44 bewirkt dabei, dass das elektronische Gerät 10 gegen deren Federkraft in die Haltevorrichtung eingeschoben werden muss. Hierbei ergibt sich eine Vorspannung der jeweiligen Federelemente 48. Wird nach Ende des Gebrauchs des elektronischen Geräts 10 die Handhabe 28 des Sicherungselements 26 betätigt und demzufolge die hemmende Sperre gemäß der mittleren Darstellung von Fig. 4 aufgehoben, so wird mittels der Federkraft der Federabstützung 44 das elektronische Gerät 10 aus der Führungseinrichtung 22 bzw. Aufnahme des Basisteils 12 ausgeschoben bzw. ausgeworfen. Hierdurch ergibt sich eine noch bessere Betätigung der Handhabe 28 des Sicherungselements 26 bzw. Entnahme des elektronischen Geräts 10 mit nur einer Hand.

Insbesondere aus Fig. 5 ist dabei auch erkennbar, dass der Rahmen 16 auch an seiner unteren Schmalseite eine entsprechende Rahmenleiste 52 aufweist, welche mit einer Wand 54 das technische Gerät 10 in der eingeschobenen Position übergreift. Somit ergibt sich nicht nur seitlich durch die jeweiligen Führungselemente 24 eine entsprechende nutartige Führung, welche beispielsweise nach Art der Rahmenleiste 52 ausgebildet ist, sondern auch an der unteren, dem Sicherungselement 26 abgewandten Seite. Auf der der Rahmenleiste 52 abgewandten Seite ergibt sich die besonders günstige Positionierung des technischen Geräts 10 durch das Rahmenelement 20, welches die Öffnung 42 überbrückt. Somit ist das elektronische Gerät 10 an allen seinen vier Außenseiten besonders günstig durch das Basisteil 12 aufgenommen.

Die Fig. 6a und 6b zeigen schließlich in einer Vorderansicht bzw. einer perspektivischen Ansicht das Basisteil 12 im Bereich der Einführungsöffnung 18. Aus Fig. 6a wird dabei insbesondere nochmals die Positionierung der jeweiligen Fixierelemente 30 des Sicherungselements 26 erkennbar. Fig. 6b verdeutlicht insbesondere nochmals die konkrete Form der Einführungsöffnung 18, welche an den Querschnitt des jeweiligen elektronischen Geräts 10, im vorliegenden Fall den Tablet-Computer, angepasst ist.

## Patentansprüche

1. Haltevorrichtung für ein tragbares elektronisches Gerät (10) in einem Kraftfahrzeug, mit einem Basisteil (12) zur Aufnahme des elektronischen Gerätes (10) und mit einem Sicherungselement (26), mittels welchem das elektronische Gerät (10) am Basisteil (12) sicherbar ist, wobei das Basisteil (12) eine Führungseinrichtung (22) mit jeweiligen seitlichen Führungselementen (24) aufweist, mittels welchen das elektronische Gerät (10) in die Haltevorrichtung einschiebbar ist,
**dadurch gekennzeichnet, dass**
das Sicherungselement (26) als Wippe mit einer auf der einen Seite einer Lagerachse (L) angeordneten Handhabe (28) und mit wenigstens einem auf der anderen Seite der Lagerachse (L) angeordneten Fixierelement (30) ausgebildet ist und wenigstens eine Einschubrampe (33) aufweist, mittels welcher das Sicherungselement (26) beim Einschieben des elektronischen Geräts (10) in die Haltevorrichtung in die Freigabestellung verlagerbar ist.

2. Haltevorrichtung nach Anspruch 1,
**dadurch gekennzeichnet, dass**
das elektronische Gerät (10) mittels der jeweiligen seitlichen Führungselemente (24) in der eingeschobenen Position fixiert ist.

3. Haltevorrichtung nach Anspruch 1 oder 2,
**dadurch gekennzeichnet, dass**
das Sicherungselement (26) zwischen einer Freigabestellung und einer Sicherungsstellung verlagerbar ist, in welcher das Sicherungselement (26) durch seine selbsthemmende Lagerung das elektronische Gerät (10) fixiert.

4. Haltevorrichtung nach einem der vorhergehenden Ansprüche,
**dadurch gekennzeichnet, dass**
der Führungseinrichtung (22) eine Federabstützung (24) zugeordnet ist, gegen deren Federkraft das elektronische Gerät (10) in die Haltevorrichtung einschiebbar ist bzw. mittels deren Federkraft das elektronische Gerät (10) nach Entsichern des Sicherungselements (26) aus der Haltevorrichtung ausschiebbar ist.

5. Haltevorrichtung nach einem der vorhergehenden Ansprüche,
**dadurch gekennzeichnet, dass**
das Sicherungselement (26) als zumindest im Wesentlichen U-förmiger Bügel ausgebildet ist, welcher eine Öffnung (42) in einer Rückwand (14) des Basisteils (12) umgibt.

6. Haltevorrichtung nach Anspruch 5,
**dadurch gekennzeichnet, dass**
das Basisteil (12) auf seiner der Rückwand (14) mit dem Sicherungselement (26) abgewandten Vorderseite einen umlaufenden Rahmen (16) mit einem Rahmenelement (20) aufweist, welches die Öffnung (42) in der Rückwand (14) des Basisteils (12) überbrückt.

## Claims

1. Holding device for a portable electronic device (10) in a motor vehicle, comprising a base part (12) for the accommodation of the electronic device (10) and a securing element (26), by means of which the electronic device (10) can be secured to the base part (12), wherein the base part (12) comprises a guide device (22) with respective lateral guide elements (24), by means of which the electronic device (10) can be inserted into the holding device,
**characterised in that**
the securing element (26) is designed as a rocker with a handle (28) located on the one side of a bearing axis (L) and with at least one fixing element (30) located on the other side of the bearing axis (L) and comprises at least one insertion ramp (33), by means of which the securing element (26) can be moved into the release position when the electronic device (10) is inserted into the holding device.

2. Holding device according to claim 1,
**characterised in that**
the electronic device (10) is fixed in the inserted position by the respective lateral guide elements (24).

3. Holding device according to claim 1 or 2,
**characterised in that**
the securing element (26) is movable between a release position and a securing position in which the securing element (26) fixes the electronic device (10) by its self-locking mounting.

4. Holding device according to any of the preceding claims,
**characterised in that**
the guide device (22) is assigned a spring support (24), against the spring force of which the electronic device (10) can be inserted into the holding device and/or by means of the spring force of which the electronic device (10) can be pushed out of the holding device after the securing element (26) has been released.

5. Holding device according to any of the preceding claims,
**characterised in that**
the securing element (26) is designed as a substantially U-shaped bracket which surrounds an opening (42) in a rear wall (14) of the base part (12).

6. Holding device according to claim 5,
**characterised in that**
the base part (12) has on its front side remote from the rear wall (14) with the securing element (26) a continuous frame (16) with a frame element (20), which bridges the opening (42) in the rear wall (14) of the base part (12).

## Revendications

1. Dispositif de retenue pour un appareil électrique portatif (10) dans un véhicule automobile, comprenant une partie de base (12) destinée à recevoir l'appareil électronique (10) et comprenant un élément coupe-circuit (26) au moyen duquel l'appareil électronique (10) peut être fixé sur la partie de base (12), la partie de base (12) présentant un dispositif de guidage (22) doté d'éléments de guidage latéraux respectifs (24), au moyen desquels l'appareil électronique (10) peut être inséré dans le dispositif de retenue, **caractérisé en ce que** l'élément coupe-circuit (26) est conçu comme une bascule dotée d'un élément de commande (28) disposé sur l'un des côtés d'un axe de palier (L) et d'au moins un élément de fixation (30) disposé sur l'autre côté de l'axe de palier (L) et présentant au moins une rampe d'insertion (33) qui permet de déplacer l'élément coupe-circuit (26) lors de l'insertion de l'appareil électronique (10) dans le dispositif de retenue dans la position de libération.

2. Dispositif de retenue selon la revendication 1, **caractérisé en ce que** l'appareil électronique (10) est fixé au moyen des éléments de guidage latéraux respectifs (24) dans la position insérée.

3. Dispositif de retenue selon la revendication 1 ou la revendication 2, **caractérisé en ce que** l'élément coupe-circuit (26) peut se déplacer entre une position de libération et une position de coupe-circuit, dans laquelle l'élément coupe-circuit (26) fixe par son montage autoportant l'appareil électronique (10).

4. Dispositif de retenue selon l'une quelconque des revendications précédentes, **caractérisé en ce que** le dispositif de guidage (22) est associé à un appui de ressort (24), l'appareil électronique (10) peut être introduit contre sa force de ressort dans le dispositif de retenue ou à l'aide de sa force de ressort l'appareil électronique (10) peut coulisser hors du dispositif de retenue après le déblocage de l'élément coupe-circuit (26).

5. Dispositif de retenue selon l'une quelconque des revendications précédentes, **caractérisé en ce que** l'élément coupe-circuit (26) est conçu au moins sensiblement comme un étrier en forme de U, qui entoure une ouverture (42) dans une paroi arrière (14) de la partie de base (12).

6. Dispositif de retenue selon la revendication 5, **caractérisé en ce que** la partie de base (12) comporte sur sa face avant opposée à la paroi arrière (14) dotée de l'élément coupe-circuit (26) un cadre périphérique (16) doté d'un élément de cadre (20) qui couvre l'ouverture (42) dans la paroi arrière (14) de la partie de base (12).
